# EUROPÄISCHE PATENTSCHRIFT

(11) **EP 1 946 065 B1**
(45) Veröffentlichungstag und Bekanntmachung des Hinweises auf die Patenterteilung: **23.02.2011**
(21) Anmeldenummer: 06807633.0
(22) Anmeldetag: 27.10.2006
(51) Int. Cl.: G01M 1/04, G01M 1/16

(54) **VERFAHREN UND VORRICHTUNG ZUM DYNAMISCHEN MESSEN DER UNWUCHT EINES ROTORS**
METHOD AND DEVICE FOR THE DYNAMIC MEASURING OF THE UNBALANCE OF A ROTOR
PROCEDE ET DISPOSITIF POUR LA MESURE DYNAMIQUE DU DESEQUILIBRE D'UN ROTOR

(30) Priorität: 09.11.2005 DE 102005053786
(43) Veröffentlichungstag der Anmeldung: 23.07.2008
(73) Patentinhaber: Schenck RoTec GmbH, 64293 Darmstadt (DE)
(72) Erfinder: THELEN, Dieter, 64397 Modautal (DE)
(74) Vertreter: Haar, Lucas Heinz Jörn
(86) Internationale Anmeldenummer: PCT/EP2006/067896
(87) Internationale Veröffentlichungsnummer: WO 2007/054445

(56) Entgegenhaltungen:
- EP-A2- 0 699 900
- DE-A1- 2 141 792
- DE-A1- 2 215 002
- DE-A1- 2 453 292
- DE-A1- 3 716 210
- DE-C1- 3 247 503
- US-A- 4 726 690

## Beschreibung

Die Erfindung betrifft ein Verfahren zum dynamischen Messen der Unwucht eines in einem Gehäuse angeordneten und mit hoher Winkelgeschwindigkeit drehbaren Rotors, der in einem separaten Lagergehäuse gelagert ist, sowie eine zur Durchführung des Verfahrens geeignete Vorrichtung. Insbesondere betrifft die Erfindung ein Verfahren und eine Vorrichtung zum Messen der Unwucht des Rotors eines Abgasturboladers.

Abgasgetriebene Turbolader haben einen Rotor, der im Betrieb mit einer sehr hohen Drehzahl von oft über 100.000 Umdrehungen pro Minute dreht und daher zur Vermeidung von Geräuschen und zu hohen Lagerbelastungen sehr genau ausgewuchtet werden muss. Der Rotor besteht in der Regel aus einer in einem zugeordneten Lagergehäuse gelagerten Welle, die an einem Ende ein Turbinenrad und am anderen Ende ein Verdichterrad trägt. Die Messung der Unwucht des Rotors erfolgt aus Genauigkeitsgründen bei einer im wesentlichen der normalen Arbeitsgeschwindigkeit entsprechenden Winkelgeschwindigkeit, wobei der Rotor mit dem Lagergehäuse in einem Turbinengehäuse fest eingebaut ist und durch Beaufschlagung des Turbinenrads mit Druckluft auf die erforderliche Drehzahl gebracht wird. Diese Verfahrensweise hat den Nachteil, dass die im Vergleich zur Masse des Rotors relativ große Masse aus Lagergehäuse und Turbinengehäuse die von der Unwucht des Rotors induzierten Schwingungen stark reduziert und damit die Empfindlichkeit und Genauigkeit der Messung beeinträchtigt.

Aus EP 0 426 676 B1 ist ein dynamisches Ausgleichsverfahren für den Hochgeschwindigkeitsrotor eines abgasangetriebenen Turboladers bekannt, bei dem das Turboladermittelgehäuse, in dem der Rotor gelagert ist, mit das Turbinenrad und das Verdichterrad umschließenden Gehäuseteilen fest verbunden wird und die so gebildete Einheit mit Hilfe von biegsamen Balgschläuchen, die an den Gehäuseteilen angreifen, in einem Rahmen in allen drei Raumrichtungen bewegbar weich gelagert wird. Auch hierbei beeinträchtigen die an dem Turboladermittelgehäuse angebrachten Gehäuseteile das Schwingungsverhalten und damit die Messung der Unwucht erheblich. An den Gehäuseteilen sind Beschleunigungsaufnehmer angeordnet, deren Beschleunigungssignale in Verbindung mit einem optisch gemessenen Phasenwinkel zur Bestimmung von Größe und Lage der Unwucht verarbeitet werden.

Aus EP 0 699 900 A2 ist ein Verfahren und eine Vorrichtung zum Auswuchten einer Turbolader-Rumpfgruppe bekannt, wobei das Lagergehäuse mittels Spannbacken auf einer federnd gelagerten Platte festgespannt wird und das freiliegende Turbinenrad mit Hilfe eines aus einer Düse austretenden Luftstrahls angetrieben wird. Spannvorrichtung und Platte bilden hierbei eine im Vergleich zur Turbolader-Rumpfgruppe große, mitschwingende Masse.

Es ist weiterhin aus US 4,726,690 A1 ein Verfahren und eine Vorrichtung zur Abstützung eines Lagerzapfens eines Rotors beim Auswuchten in einer Lagerung bekannt, wobei eine Bewegung des Lagerzapfens um eine Hoch-, Quer- und Rotorachse zugelassen wird. Hierbei sind zwischen der Lagerung für den Lagerzapfen und einem die Unwuchtinformation weitergebenden Teil eines Lagerständers eine die Bewegung des Lagerzapfens zulassende Federanordnung und Stützelemente zur Übertragung des Rotor- und Lagergewichts auf den Lagerständer angeordnet und so ausgebildet, dass bei den Bewegungen des Lagerzapfens eine Coulomb-Reibung vermieden wird.

DE 2141792 A1 offenbart eine im Wesentlichen starre Umlaufkörperlagerung mit einer Abstützung jeder Lagerstelle durch ein Federstabsystem, das in einer senkrecht zur Lagerhauptachse durch den Lagermittelpunkt verlaufenden Ebene angeordnet ist und aus zug-, druck- und knickstarren, aber in einem oder mehreren Abschnitten biegeweichen Federstäben besteht, welche das Lagergehäuse gegen Drehbewegungen um die Lagerhauptachse sichern und in allen radialen Richtungen gleichmäßig hart gegen das Maschinenbett abstützen.

Eine unterkritisch abgestimmte Auswuchtmaschine zum Auswuchten eines mit senkrechter Drehachse rotierenden Prüfkörpers in zwei Ebenen ist aus DE 24 53 292 A1 bekannt. Die Prüfkörperlagerung ist hierbei an einem horizontalen, als Torsionsfeder ausgebildeten Steg eines U-förmigen Bügels angeordnet und über mindestens zwei zusätzliche, horizontale Biegefedern mit den Schenkeln des Bügels verbunden.

Bei einer in DE 2 215 002 A1 beschriebenen, unterkritisch abgestimmten Auswuchtmaschine ist die Wuchtkörperlagerung an einem Ende einer Feder festgespannt, die mit dem anderen Ende ortsfest eingespannt ist. Ein an der Wuchtkörperlagerung befestigter, biegesteifer Träger dient zur Ankopplung neuer Messwertumformer, wobei der Ankopplungspunkt eines Messwertumformers sich aus dem Schnittpunkt der Tangenten an die Biegelinie der Feder in beiden Einspannstellen unter dynamischer Unwuchtwirkung ergibt.

Eine aus DE 37 16 210 A1 bekannte Vorrichtung zur schwingenden Abstützung einer Rotorlagerung einer Zwei-Ebenen-Auswuchtmaschine weist zwei Federpaare aus jeweils zwei parallelen Stabfedern auf. Die jeweils beiden Stabfedern eines Federpaares sind mit Befestigungsleisten, die am Maschinenständer und an der Rotorlagerung befestigt sind, zu einem einstückigen Rahmen verbunden.

Aus DE 32 47 503 C1 ist eine Einrichtung zur statischen Unwuchtbestimmung an Luftschrauben bekannt, bei der die Luftschraube auf einer rohrförmigen Hohlbiegefeder abgestützt wird. Die Lage eines koaxial zur Hohlbiegefeder angeordneten Übertragungsglieds wird in zwei Koordianten durch Messfühler abgegriffen und von einem Lichtpunktanzeigegerät als Vektor angezeigt.

Der Erfindung liegt die Aufgabe zugrunde, ein Verfahren der eingangs genannten Art anzugeben, welches den nachteiligen Einfluss der mitschwingenden Masse reduziert und eine hohe Genauigkeit der Unwuchtmessung ermöglicht. Es ist weiterhin Aufgabe der Erfindung, eine zur Durchführung des Verfahrens besonders geeignete Vorrichtung zu schaffen.

Die genannte Aufgabe wird hinsichtlich des Verfahrens durch die in Patentanspruch 1 angegebenen Merkmale und hinsichtlich der Vorrichtung durch die in Patentanspruch 2 angegebenen Merkmale gelöst. Vorteilhafte Ausgestaltungen der Vorrichtung sind in den Ansprüchen 3 bis 9 angegeben.

Nach der Erfindung umfasst das Verfahren zum dynamischen Messen der Unwucht eines in einem Gehäuse angeordneten und mit hoher Winkelgeschwindigkeit drehenden Rotors, wobei der Rotor in einem separaten Lagergehäuse gelagert ist, die Schritte: Befestigen des Lagergehäuses an dem Gehäuse unter Zwischenschaltung federnd nachgiebiger Elemente derart, dass das Lagergehäuse relativ zum Gehäuse in mindestens zwei Freiheitsgraden bewegbar ist und der Rotor in einer zum Antrieb geeigneten Arbeitslage im Gehäuse angeordnet ist, Beschleunigung des Rotors auf eine im wesentlichen normale Arbeitsgeschwindigkeit, Messen der durch Unwucht induzierten Schwingungen während der Rotor mit einer im wesentlichen normalen Arbeitsgeschwindigkeit dreht, Bestimmung der Phasenlage der durch Unwucht induzierten Schwingungen zur Winkellage des Rotors bei den Messdrehzahlen, bei denen die durch Unwucht induzierten Schwingungen gemessen werden, Verwendung der gemessenen durch Unwucht induzierten Schwingungen und der Phasenlage, um die auszugleichende Unwucht des Rotors zu bestimmen, wobei ein Gehäuses, das eine zentrale Öffnung und einen mit dieser in Verbindung stehenden Spiralkanal aufweist, die zur Aufnahme des Turbinenrads ausgebildet sind, und ein Lagerring (10) verwendet werden, der durch die federnd nachgiebigen Elemente (6) mit dem Gehäuse (1) verbunden ist und der eine zentrale Bohrung (11) zur Aufnahme eines Ringflansches (13) des Lagergehäuses (14) und Spannmittel zum Festspannen des Lagergehäuses (14) hat, und wobei in der aufgespannten Lage des Lagergehäuse (14) an dem Lagerring (10) das Turbinenrad (17) in dem Spiralkanal (4a) und in der Öffnung (5) angeordnet wird.

Das erfindungsgemäße Verfahren hat den Vorteil, dass nur der Rotor, das Lagergehäuse und seine darin aufgenommene Lagerung unabhängig von weiteren Massen, wie der Masse des Gehäuses und seiner Befestigung, unwuchtinduzierte Schwingungen ausführen. Die mitschwingende Masse des Messaufbaus ist dadurch auf das unvermeidbare Minimum der zur Lagerung des Rotors erforderlichen Teile beschränkt und damit im Vergleich zu dem eingangs genannten Stand der Technik erheblich reduziert. Dies hat den Vorteil, dass Fehler der Unwuchtmessung, die durch mitschwingende Massen verursacht werden, erheblich verringert werden und damit die Unwuchtmessung wesentlich genauer wird.

Zur Durchführung des Verfahrens sieht die Erfindung eine Vorrichtung zum dynamischen Messen der Unwucht eines in einem Lagergehäuse gelagerten und mit hoher Winkelgeschwindigkeit drehbaren Rotors eines Turboladers, wobei der Rotor in einem Lagergehäuse gelagert ist und an seinen entgegengesetzten Enden ein Turbinenrad und ein Verdichterrad hat, mit einem Gehäuse, an dem der Rotor und das Lagergehäuse in einer zum Antrieb des Rotors mit einer im wesentlichen normalen Arbeitsgeschwindigkeit geeigneten Arbeitslage anbringbar ist, wobei das Gehäuse wenigstens ein federnd nachgiebiges Element aufweist, an dem das Lagergehäuse derart befestigbar ist, dass es relativ zum Gehäuse in mindestens zwei Raumrichtungen bewegbar ist, wobei das Gehäuse eine zentrale Öffnung und einen mit dieser in Verbindung stehenden Spiralkanal aufweist, die zur Aufnahme des Turbinenrads ausgebildet sind, dass die federnd nachgiebigen Elemente auf der Befestigungsseite für das Lagergehäuse durch einen Lagerring miteinander verbunden sind, der eine zentrale Bohrung zur Aufnahme eines Ringflansches des Lagergehäuses hat, und dass an dem Lagerring Spannmittel zum Festspannen des Lagergehäuses angeordnet sind. Die erfindungsgemäße Vorrichtung ist einfach und kostengünstig herstellbar und ermöglicht eine Messung der Rotorunwucht mit hoher Genauigkeit.

Vorzugsweise sind an dem Gehäuse der Vorrichtung mehrere, insbesondere vier, in axialer und radialer Richtung federnd nachgiebige Elemente konzentrisch zur Drehachse des Rotors in regelmäßigem Umfangsabstand angeordnet. Durch eine solche Anordnung wird eine federnde Lagerung des Lagergehäuses erreicht, deren Steifigkeit in allen radialen Richtungen im wesentlichen gleich ist.

Nach einem weiteren Vorschlag der Erfindung können die federnd nachgiebigen Elemente auf der Befestigungsseite für das Lagergehäuse durch einen Lagerring miteinander verbunden sein und es können Spannmittel zum Festspannen des Lagergehäuses an dem Lagerring vorgesehen sein. Durch diese Gestaltung wird die Handhabung der Vorrichtung erleichtert, da das Lagergehäuse nicht einzeln mit den Federelementen verbunden werden muss. Zudem ermöglicht der Lagerring eine gekapselte Anordnung der Federelemente, so dass diese nicht beschädigt werden können. Weiterhin kann durch Begrenzung des Bewegungsraums des Lagerrings die Schwingungsamplitude des Rotorgehäuses auf einen Maximalwert begrenzt werden. Erfindungsgemäß können an dem Lagerring Schwingungsaufnehmer, insbesondere Beschleunigungsaufnehmer angeordnet sein.

Die federnd nachgiebigen Elemente haben nach einem weiteren Vorschlag der Erfindung vorzugsweise die Form eines Kreisringsektors mit einem radial inneren Sektorabschnitt, einem radial äußeren Sektorabschnitt und Federelementen, die beide Sektorabschnitte miteinander verbinden. Diese Gestaltung der federnd nachgiebigen Elemente lässt sich auf vorteilhaft einfache Weise mit dem Gehäuse und dem Lagerring verbinden und benötigt wenig axialen Bauraum.

Als zweckmäßig hat sich erwiesen, wenn die federnd nachgiebige Elemente mit dem radial inneren Sektorabschnitt an dem Gehäuse und dem radial äußeren Sektorabschnitt an dem Lagerring befestigt sind, so dass sie in radialer Richtung nicht über den Lagerring hinausragen. Die Federelemente, welche die beiden Sektorabschnitte miteinander verbinden, können S- oder Z-förmig gebogen sein. Dies hat den Vorteil, dass zur Erzielung der erforderlichen Federweichheit wenig radialer Bauraum benötigt wird. Die beiden Sektorabschnitte und die sie miteinander verbindenden Federelemente können auf einfache Weise aus einem Stück, beispielsweise einem Federblech hergestellt sein. Dies ermöglicht eine kostengünstige Herstellung.

Eine andere vorteilhafte Ausgestaltung einer Vorrichtung nach der Erfindung sieht vor, dass das Gehäuse zwei Federstäbe aufweist, an denen das Lagergehäuse oder der Lagerring befestigbar sind, wobei die Federstäbe in einer gemeinsamen, zur Drehachse des Rotors parallelen Ebene angeordnet sind und sich in Richtung der Drehachse des Rotors erstrecken. Hierbei kann das Lagergehäuse relativ zum Gehäuse in allen radialen Richtungen bewegt und um eine in der Ebene liegende radiale Achse gedreht werden. Vorzugsweise sind die Federstäbe in einer vertikalen Ebene angeordnet und haben jeweils an der gleichen Stelle wenigstens einen Biegeabschnitt geringerer Steifigkeit. Die Steifigkeit des Biegeabschnitts kann in horizontaler Richtung geringer sein als in vertikaler Richtung. Insbesondere kann die Steifigkeit der Federstäbe in horizontaler Richtung ca. 10% der Steifigkeit der Federstäbe in vertikaler Richtung betragen. Die höhere Steifigkeit der Federstäbe in vertikaler Richtung dient der Abstützung des Gewichts von Rotor und Lagergehäuse.

Die Erfindung wird nachfolgend anhand von Ausführungsbeispielen näher erläutert, die in der Zeichnung dargestellt sind. Es zeigen
- Figur 1: einen Querschnitt einer Unwuchtmessvorrichtung nach der Erfin- dung mit darin angeordneter Turboladerrumpfgruppe und
- Figur 2: eine Ansicht der die federnd nachgiebigen Elemente und den Lagerring umfassenden Baueinheit der Vorrichtung gemäß Figur 1
- Figur 3: einen Querschnitt der anderen Ausführungsform einer Unwucht- messvorrichtung nach der Erfindung mit darin angeordneter Turbolader-Rumpfgruppe.

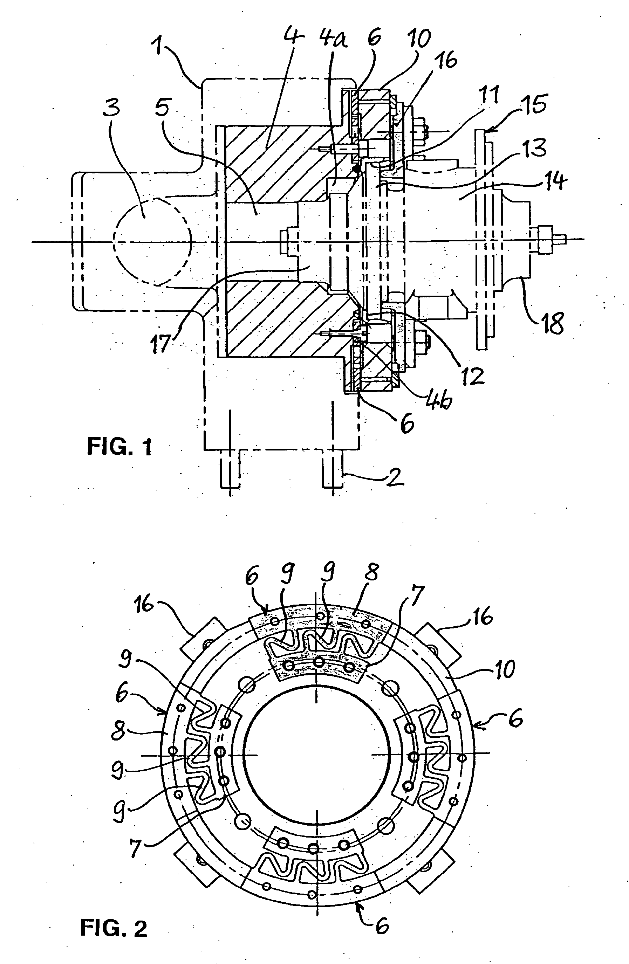

Die in Figur 1 gezeigte Unwuchtmessvorrichtung umfasst ein Gehäuse 1, das mittels Schrauben 2 auf einem Sockel oder Gestell befestigbar ist. Das Gehäuse 1 enthält einen Strömungskanal 3 und ein ringförmiges Spira-lgehäuse 4, dessen zentrale Öffnung 5 mit dem Strömungskanal 3 in Verbindung steht. Das Spiralgehäuse 4 weist auf der dem Strömungskanal 3 abgekehrten Stirnseite einen Spiralkanal 4a und eine zu seiner Längsmittelachse konzentrische Ringfläche 4b auf, an der jeweils im gleichen Abstand von der Längsmittelachse und im gleichen Abstand voneinander vier federnd nachgiebige Elemente 6 gleicher Ausgestaltung mittels Schrauben befestigt sind.

Wie aus Figur 2 zu ersehen, haben die federnd nachgiebigen Elemente 6 im wesentlichen die Form von kreisringsektorförmigen Platten, die durch Ausnehmungen in einen radial inneren Sektorabschnitt 7, einen radial äußeren Sektorabschnitt 8 und die beiden Sektorabschnitte miteinander verbindende Z-förmige Federelemente 9 unterteilt sind. Die Elemente 6 bestehen jeweils aus einem Stück und können durch Ausschneiden aus einem Blech aus Federmaterial, insbesondere Federstahl, einfach und kostengünstig hergestellt werden.

Die Elemente 6 sind an dem Spiralgehäuse 4 mit ihrem inneren Sektorabschnitt 7 befestigt und erstrecken sich radial nach außen. An den äußeren Sektorabschnitten 8 der Elemente 6 ist auf der dem Spiralgehäuse 4 abgekehrten Seite ein Lagerring 10 mittels Schrauben befestigt. Der Lagerring 10 liegt hierbei mit einer erhabenen Ringfläche an den Sektorabschnitten 8 an und hat im übrigen einen axialen Abstand von dem Federelement 9, den Sektorabschnitten 7 und auch dem Spiralgehäuse 4. Die Stirnfläche des Spiralgehäuses 4 ist im Bereich der Federelemente 9 und der Sektorabschnitte 8 axial zurückgesetzt, so dass auch hier ein axialer Abstand zu den Federelementen 9 und den Sektorabschnitten 8 gegeben ist. Zudem ist ein Zwischenraum zwischen den radial äußeren Rändern der Sektorabschnitte 8 und dem Gehäuse 1 vorhanden. Die Sektorabschnitte 8 und der mit ihnen fest verbundene Lagerring 10 können daher, getragen von den Federelementen 9, radiale und axiale Schwingungsbewegungen relativ zum Gehäuse 1 und zum Spiralgehäuse 4 ausführen.

Der Lagerring 10 weist eine zentrale Bohrung 11 mit einer Schulter 12 auf. Die Bohrung 11 dient zur Aufnahme eines Ringflansches 13, der sich am Lagergehäuse 14 einer zu vermessenden Turbolader-Rumpfgruppe 15 befindet. Nach dem Einsetzen der Turbotader-Rumpfgruppe 15 in die Bohrung 11 wird der Flansch 13 mit Hilfe von Spannpratzen 16, die an dem Lagerring 10 angeordnet sind, gegen die Schulter 12 gespannt.

Die Turbolader-Rumpfgruppe 15 umfasst neben dem Lagergehäuse 14 einen in diesem gelagerte Welle, sowie ein Turbinenrad 17 und ein Verdichterrad 18, die an den entgegengesetzten Enden der Welle befestigt sind. In der aufgespannten Lage befindet sich das Turbinenrad 17 in dem Spiralkanal 4a und in der Öffnung 5 des Spiralgehäuses 4. Durch den Spiralkanal 4a kann ein Luftstrom in geeigneter Weise auf das Turbinenrad 17 gelenkt werden, um dieses anzutreiben. Die Abluft wird über die Öffnung 5 und den Strömungskanal 3 abgeführt. Die Innenkonturen des Spiralkanals 4a und der Öffnung 5 sind so gestaltet, dass ein genügend großer Abstand zum Turbinenrad 17 verbleibt, damit es nicht anstoßen kann, wenn die Turbolader-Rumpfgruppe 15 schwingt. Das Verdichterrad 18 ist außerhalb des Gehäuses 1 angeordnet. Es wird zur Strömungsführung und aus Schutzgründen durch ein Verdichtergehäuse oder eine Schutzhaube abgedeckt.

Zur Messung einer Unwucht des aus Turbinenrad 17, Welle und Verdichterrad 18 bestehenden Rotors wird das Turbinenrad 17 mit Luft angetrieben und auf eine im wesentlichen der normalen Arbeitsgeschwindigkeit entsprechende Drehzahl beschleunigt. Durch eine vorhandene Unwucht des Rotors werden hierbei in die schwingende Masse aus Turbolader-Rumpfgruppe 15 und Lagerring 10 Schwingungen induziert, die mit Hilfe von an dem Lagerring 10 angeordneten Schwingungs- bzw. Beschleunigungsaufnehmern bei verschiedenen Drehzahlen gemessen werden. Gleichzeitig wird durch einen Drehwinkelgeber die jeweilige Phasenlage der gemessenen induzierten Schwingungen in Bezug auf den Rotor bestimmt. Aus den gemessenen Werten wird dann mit Hilfe eines elektronischen Rechners Winkellage und Größe der auszugleichenden Unwucht bestimmt.

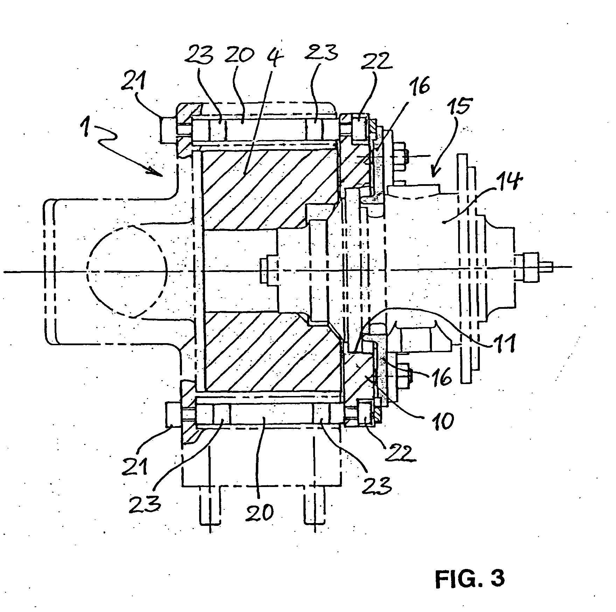

Figur 3 zeigt eine andere Ausgestaltung einer Unwuchtmessvorrichtung nach der Erfindung, welche wie das zuvor beschriebene Ausführungsbeispiel ein Gehäuse 1, ein darin angeordnetes Spiralgehäuse 4 und einen Lagerring 10 umfasst, in dessen Bohrung 11 das Lagergehäuse 14 einer zu vermessenden Turbolader-Rumpfgruppe 15 mittels Spannpratzen 16 festspannbar ist. Als Federelemente weist dieses Ausführungsbeispiel zwei Federstäbe 20 auf, die an einem Ende mittels Schrauben 21 an dem Gehäuse 1 und am anderen Ende mittels Schrauben 22 an dem Lagerringe 10 befestigt sind. Die Federstäbe 20 befinden sich in Freiräumen innerhalb des Gehäuses 1 und ihre Längsachsen liegen in einer gemeinsamen, die Drehachse des Rotors der Turbolader-Rumpfgruppe 15 enthaltenden, vertikalen Ebene und sind parallel und diametral zur Drehachse des Rotors angeordnet. In einem geringen Abstand von ihren beiden Enden haben die Federstäbe 20 Biegeabschnitte 23 von geringerer Steifigkeit, die durch örtliche, einander entgegengesetzte Abflachungen der Federstäbe 20 gebildet sind. Die Biegeabschnitte 23 sind so ausgebildet, dass ihre Steifigkeit in Richtung der den Federstäben 20 gemeinsamen, vertikalen Mittelebene etwa zehnmal größer ist, als ihre Steifigkeit in einer zu der genannten Mittelebene senkrechten Richtung. Durch die beschriebene Gestaltung und Anordnung der Federstäbe 20 wird der Lagerring 10 und die darin angeordnete Turbolader-Rumpfgruppe 15 an dem Gehäuse 1 derart federnd nachgiebig abgestützt, dass sie in beliebiger radialer Richtung bewegbar ist, wobei die Steifigkeit der Abstützung in horizontaler Richtung etwa um den Faktor 10 geringer ist als in vertikaler Richtung. Außerdem ist eine Drehung des Lagerrings 10 mit der darin gehaltenen Turbolader-Rumpfgruppe 15 um eine vertikale, in der den Federstäben 20 gemeinsamen Mittelebene liegende Achse möglich. Damit ist eine Abstützung mit mindestens zwei Freiheitsgraden gegeben, die zur genauen Messung der Rotorunwucht erforderlich sind.

Die beschriebenen Vorrichtungen haben den Vorteil, dass die bei der Unwuchtmessung mitschwingende Masse optimal klein ist, da sie lediglich das Lagergehäuse der Turbolader-Rumpfgruppe und die Mittel zu seiner Aufspannung, nämlich den Lagerring 10 einschließlich Spannmitteln umfasst. Mit der beschriebenen Vorrichtung lässt sich daher eine im Vergleich zum Stand der Technik wesentlich höhere Messgenauigkeit erzielen. Die Vorrichtungen haben weiterhin den Vorteil, dass sie leicht zu handhaben sind und kostengünstig hergestellt werden können.

## Patentansprüche

1. Verfahren zum dynamischen Messen der Unwucht eines in einem Gehäuse (1) angeordneten und mit hoher Winkelgeschwindigkeit drehenden Rotors, wobei der Rotor in einem separaten Lagergehäuse (14) gelagert ist und an seinen entgegengesetzten Enden ein Turbinenrad (17) und ein Verdichterrad (18) hat, umfassend die Schritte:
Befestigen des Lagergehäuses (14) an dem Gehäuse (1) unter Zwischenschaltung federnd nachgiebiger Elemente (6) derart, dass das Lagergehäuse (14) mindestens zwei Freiheitsgrade zur Bewegung relativ zum Gehäuse (1) hat und der Rotor in einer zum Antrieb geeigneten Arbeitslage im Gehäuse (1) angeordnet ist,
Beschleunigung des Rotors auf eine im wesentlichen normale Arbeitsgeschwindigkeit,
Messen der durch Unwucht induzierten Schwingungen während der Rotor mit einer im wesentlichen normalen Arbeitsgeschwindigkeit dreht,
Bestimmung der Phasenlage der durch Unwucht induzierten Schwingungen zur Winkellage des Rotors bei den Messdrehzahlen, bei denen die durch Unwucht induzierten Schwingungen gemessen werden,
Verwendung der gemessenen durch Unwucht induzierten Schwingungen und der Phasenlage, um die auszugleichende Unwucht des Rotors zu bestimmen, **gekennzeichnet durch** Verwendung eines mit dem Gehäuse verbundenen Spiralgehäuses (4), das eine zentrale Öffnung (5) und einen mit dieser in Verbindung stehenden Spiralkanal (4a) aufweist; die zur Aufnahme des Turbinenrads (17) ausgebildet sind, und eines Lagerrings (10), der durch die federnd nachgiebigen Elemente (6) mit dem Gehäuse (1) oder Spiralgehäuse verbunden ist und der eine zentrale Bohrung (11) zur Aufnahme eines Ringflansches (13) des Lagergehäuses (14) und Spannmittel zum Festspannen des Lagergehäuses (14) hat, wobei in der aufgespannten Lage des Lagergehäuse (14) an dem Lagerring (10) das Turbinenrad (17) in dem Spiralkanal (4a) und in der Öffnung (5) angeordnet ist.

2. Vorrichtung zum dynamischen Messen der Unwucht eines mit hoher Winkelgeschwindigkeit drehbaren Rotors eines Turboladers, wobei der Rotor in einem Lagergehäuse (14) gelagert ist und an seinen entgegengesetzten Enden ein Turbinenrad (17) und ein Verdichterrad (18) hat, mit einem Gehäuse (1), an dem der Rotor und das Lagergehäuse (14) in einer zum Antrieb des Rotors mit einer im wesentlichen normalen Arbeitsgeschwindigkeit geeigneten Arbeitslage anbringbar ist, wobei das Gehäuse (1) wenigstens ein federnd nachgiebiges Element (6) aufweist, an dem das Lagergehäuse (14) derart befestigbar ist, dass das Lagergehäuse (14) relativ zum Gehäuse (1) in mindestens zwei Freiheitsgraden bewegbar ist, **dadurch gekennzeichnet, dass**
ein mit dem Gehäuse verbundenes Spiralgehäuse (4) eine zentrale Öffnung (5) und einen mit dieser in Verbindung stehenden Spiralkanal (4a) aufweist, die zur Aufnahme des Turbinenrads (17) ausgebildet sind, dass die federnd nachgiebigen Elemente (6) auf der Befestigungsseite für das Lagergehäuse (14) durch einen Lagerring (10) miteinander verbunden sind, der eine zentrale Bohrung (11) zur Aufnahme eines Ringflansches (13) des Lagergehäuses (14) hat, und dass an dem Lagerring (10) Spannmittel zum Festspannen des Lagergehäuses (14) angeordnet sind.

3. Vorrichtung nach Anspruch 2, **dadurch gekennzeichnet, dass** an dem Gehäuse (1) mehrere gleiche, in axialer und radialer Richtung federnd nachgiebige Elemente (6) konzentrisch zur Drehachse des Rotors in regelmäßigem Umfangsabstand angeordnet sind.

4. Vorrichtung nach dem vorhergehenden Anspruch, **dadurch gekennzeichnet, dass** an dem Lagerring (10) Schwingungsaufnehmer, insbesondere ein Beschleunigungsaufnehmer angeordnet sind.

5. Vorrichtung nach einem der Ansprüche 3 bis 4, **dadurch gekennzeichnet, dass** die federnd nachgiebigen Elemente (6) die Form eines Kreisringsektors haben, der einen radial inneren Sektorabschnitt (7), einen radial äußeren Sektorabschnitt (8) und die beiden Sektorabschnitte (7, 8) miteinander verbindende Federelemente (9) aufweist.

6. Vorrichtung nach Anspruch 5, **dadurch gekennzeichnet, dass** die federnd nachgiebige Elemente (6) mit dem radial inneren Sektorabschnitt (7) an dem Gehäuse und dem radial äußeren Sektorabschnitt (8) an dem Lagerring (10) befestigt sind.

7. Vorrichtung nach einem der Ansprüche 5 oder 6, **dadurch gekennzeichnet, dass** die die beiden Sektorabschnitte (7, 8) miteinander verbindenden Federelemente (9) S- oder Z-förmig gebogen sind.

8. Vorrichtung nach einem der Ansprüche 5 bis 7, **dadurch gekennzeichnet, dass** die beiden Sektorabschnitte (7, 8) und die sie miteinander verbindenden Federelemente (9) aus einem Stück hergestellt sind.

9. Vorrichtung nach Anspruch 2, **dadurch gekennzeichnet, dass** das Gehäuse zwei Federstäbe (20) aufweist, an denen das Lagergehäuse (14) oder der Lagerring (10) befestigbar sind, wobei die Federstäbe (20) in einer gemeinsamen, zur Drehachse des Rotors parallelen Ebene angeordnet sind und sich in Richtung der Drehachse des Rotors erstrecken.

10. Vorrichtung nach Anspruch 9, **dadurch gekennzeichnet, dass** die Federstäbe (20) in einer vertikalen Ebene angeordnet sind und jeweils an der gleichen Stelle wenigstens einen Biegeabschnitt (23) geringerer Steifigkeit haben, dessen Steifigkeit in horizontaler Richtung geringer ist als in vertikaler Richtung.

## Claims

1. Method for dynamically measuring the unbalance of a rotor arranged in a housing (1) and rotating at high angular velocity, the rotor being supported in a separate bearing housing (14), and having a turbine wheel (17) and a compressor wheel (18) at its opposite ends, comprising the steps:
fastening the bearing housing (14) on the housing (I) with interposition of resiliently yielding elements (6) in such a way that the bearing housing (14) has at least two degrees of freedom relative to the housing (I) and the rotor is arranged in a working position in the housing (1) suitable for driving,
acceleration of the rotor to a substantially normal working speed,
measuring the vibrations induced by unbalance while the rotor rotates at a substantially normal working speed,
determination of the phase position of the vibrations induced by unbalance relative to the angular position of the rotor at the measuring speeds at which the vibrations induced by unbalance are measured,
use of the measured vibrations induced by unbalance and of the phase position to determine the unbalance of the rotor to be compensated,
**characterised by** using a spiral housing (4) connected to the housing and having a central aperture (5) and a spiral channel (4a) connected thereto, both of which are adapted to receive the turbine wheel (17), and a bearing ring (10), which is connected to the housing (I) or the spiral housing (4) with interposition of resiliently yielding elements (6), and has a central hole (11) for accommodating a ring flange (13) provided at the bearing housing (14) and fixing means for fixing the bearing housing (14), wherein in the position of the bearing housing (14) fixed to the bearing ring (10) the turbine wheel (17) is located in the spiral channel (4a) and in the aperture (5).

2. Device for dynamically measuring the unbalance of a rotor of a turbocharger rotatable at high angular velocity, wherein the rotor is supported in a bearing housing (14) and has a turbine wheel (17) and a compressor wheel (18) at its opposite ends, with a housing (1) to which, the rotor and the bearing housing (14) can be attached in a working position suitable for driving the rotor at a substantially normal working speed, wherein the housing (1) comprises at least one resiliently yielding element (6) to which the bearing housing (14) can be fastened in such a way that the bearing housing (14) can be moved in at least two degrees of freedom relative to the housing (1), **characterised in that** a spiral housing (4) is connected to the housing and comprises a central aperture (5) and a spiral channel (4a) connected thereto, both of which are adapted to receive the turbine wheel (17), that the resiliently yielding elements (6) are interconnected on the fastening face for the bearing housing (14) by means of a bearing ring (10) having a central hole (11) for accommodating a ring flange (13) of the bearing housing (14), and that fixing means for fixing the bearing housing (14) are provided on the bearing ring (10).

3. Device according to claim 2, **characterised in that** a plurality of identical elements (6), resiliently yielding in the axial and radial directions, are arranged on the housing (1) concentrically to the rotational axis of the rotor and with uniform spacing round the periphery.

4. Device according to the preceding claim, **characterised in that** vibration sensors, in particular an acceleration sensor, are arranged on the bearing ring (10).

5. Device according to any one of claims 3 to 4, **characterised in that** the resiliently yielding elements (6) have the form of a ring sector with a radially internal sector portion (7), a radially external sector portion (8) and spring elements (9) interconnecting the two sector portions (7, 8).

6. Device according to claim 5, **characterised in that** the resiliently yielding elements (6) are fastened with the radially internal sector portion (7) on the housing and the radially external sector portion (8) on the bearing ring (10).

7. Device according to either claim 5 or claim 6, **characterised in that** the spring elements (9) interconnnecting the two sector portions (7, 8) are bent in an S-shape or Z-shape.

8. Device according to any one of claims 5 to 7, **characterised in that** the two sector portions (7, 8) and the spring elements (9) interconnecting them are manufactured in one piece.

9. Device according to claim 2, **characterised in that** the housing comprises two spring rods (20) on which the bearing housing (14) or the bearing ring (10) can be fastened, the spring rods (20) being arranged in a common plane parallel to the rotational axis of the rotor and extending in the direction of the rotational axis of the rotor.

10. Device according to claim 9, **characterised in that** the spring rods (20) are arranged in a vertical plane and in the same region each have at least one bending portion (23) of lesser stiffness whose stiffness is less in the horizontal direction than in the vertical direction.

## Revendications

1. Procédé de mesure dynamique du balourd d'un rotor disposé dans un carter (1) et tournant à une grande vitesse angulaire, le rotor étant monté dans un carter de palier (14) séparé et comportant au niveau de ses extrémités opposées une roue de turbine (17) et une roue de compresseur (18), comportant les étapes fixation du carter de palier (14) sur le carter (1) en interposant des éléments (6)
élastiquement flexibles, de telle sorte que le carter de palier (14) possède au moins deux degrés de liberté de mouvement par rapport au carter (1) et que le rotor soit disposé dans le carter (1) dans une position de travail adaptée à l'entraînement,
- accélération du rotor à une vitesse de travail sensiblement normale,
- mesure des oscillations induites par le balourd pendant que le rotor tourne avec une vitesse de travail sensiblement normale,
- détermination de la position de phase des oscillations induites par le balourd par rapport à la position angulaire du rotor pendant les vitesses de rotation auxquelles sont mesurées les oscillations induites par le balourd,
- utilisation des oscillations mesurées, induites par le balourd, et de la position de phase, pour déterminer le balourd à équilibrer du rotor,
**caractérisé par** l'utilisation d'un carter hélicoïdal (4) relié au carter, lequel comporte une ouverture centrale (5) et un conduit hélicoïdal (4a) communiquant avec celle-ci, lesquels sont configurés pour recevoir la roue de turbine (17), et d'une bague de palier (10) qui est reliée, par l'intermédiaire des éléments (6) élastiquement flexibles, avec le carter (1) ou le carter hélicoïdal et qui possède une forure centrale (11) destinée à recevoir un collet annulaire (13) du carter de palier (14) et des moyens de serrage pour bloquer le carter de palier (14), la roue de turbine (17) étant agencée dans le conduit hélicoïdal (4a) et dans l'ouverture (5) lorsque le carter de palier (14) est monté sur la bague de palier (10).

2. Dispositif de mesure dynamique du balourd d'un rotor d'un turbocompresseur, lequel rotor étant apte à tourner à grande vitesse angulaire, le rotor étant monté dans un carter de palier (14) et comportant au niveau de ses extrémités opposées une roue de turbine (17) et une roue de compresseur (18), lequel dispositif comporte un carter (1), sur lequel le rotor et le carter de palier (14) peuvent être montés dans une position de travail adaptée à l'entraînement du rotor avec une vitesse de travail sensiblement normale, le carter (1) comportant au moins un élément (6) élastiquement flexible, auquel le carter de palier (14) peut être fixé de telle sorte que le carter de palier (14) est mobile par rapport au carter (1) dans au moins deux degrés de liberté, **caractérisé en ce qu'**un carter hélicoïdal (4) relié au carter comporte une ouverture centrale (5) et un conduit hélicoïdal (4a) communiquant avec celle-ci, lesquels sont configurés pour recevoir la roue de turbine (17), **en ce que** les éléments (6) élastiquement flexibles, sur le côté de fixation pour le carter de palier (14), sont re iés entre eux par une bague de palier (10) qui possède une forure centrale (11) destinée à recevoir un collet annulaire (13) du carter de palier (14), et **en ce que** des moyens de serrage pour bloquer le carter de palier (14) sont disposés sur la bague de palier (10).

3. Dispositif selon la revendication 2, **caractérisé en ce que** plusieurs éléments (6) identiques, élastiquement flexibles dans la direction axiale et radiale, sont disposés sur le carter (1) à distance régu ière les uns des autres sur le pourtour, concentriquement à l'axe de rotation du rotor.

4. Dispositif selon la revendication précédente, **caractérisé en ce que** des capteurs d'oscillations, en particulier un capteur d'accélération, sont disposés sur la bague de palier (10).

5. Dispositif selon l'une des revendications 3 à 4, **caractérisé en ce que** les éléments (6) élastiquement flexibles ont la forme d'un secteur de cercle qui comporte une partie de secteur (7) intérieure radialement, une partie de secteur (8) extérieure radialement et des éléments ressort (9) reliant l'une à l'autre les deux parties de secteur (7,8).

6. Dispositif selon la revendication 5, **caractérisé en ce que** les éléments (6) élastiquement flexibles sont fixés au carter avec la partie de secteur (7) intérieure radialement et à la bague de palier (10) avec la partie de secteur (8) radialement extérieure.

7. Dispositif selon la revendication 5 ou 6, **caractérisé en ce que** les éléments ressort (9) qui relient l'une à l'autre les deux parties de secteur (7, 8) sont recourbés en forme de S ou de Z.

8. Dispositif selon l'une des revendications 5 à 7, **caractérisé en ce que** les deux parties de secteur (7, 8) et les éléments ressort (9) qui les relient l'une à l'autre sont réalisés d'un seul tenant.

9. Dispositif selon la revendication 2, **caractérisé en ce que** le carter comporte deux barres flexibles (20), sur lesquels peuvent être fixés le carter de palier (14) ou la bague de palier (10), les barres flexibles (20) étant disposées dans un plan commun parallèle à l'axe de rotation du rotor, et s'étendant dans la direction de l'axe de rotation du rotor.

10. Dispositif selon la revendication 9, **caractérisé en ce que** les barres flexibles (20) sont disposées dans un plan vertical et possèdent, chacune au même emplacement, au moins une zone flexible (23) de rigidité inférieure, dont la rigidité dans la direction horizontale est inférieure à la rigidité dans la direction verticale.
